Europäisches Patentamt

European Patent Office

Office européen des brevets

(11) Publication number: **0 287 038 B1**

# EUROPEAN PATENT SPECIFICATION

(45) Date of publication of patent specification: **26.02.92**  (51) Int. Cl.5: **F02D 13/02**

(21) Application number: **88105823.4**

(22) Date of filing: **12.04.88**

(54) **Exhaust- timing controlling device and method for an internal combustion engine.**

(30) Priority: **14.04.87 JP 91637/87**
**27.10.87 JP 271397/87**

(43) Date of publication of application:
**19.10.88 Bulletin 88/42**

(45) Publication of the grant of the patent:
**26.02.92 Bulletin 92/09**

(84) Designated Contracting States:
**AT DE IT**

(56) References cited:
**EP-A- 0 246 093**

**PATENT ABSTRACTS OF JAPAN, vol. 10, no. 151 (M-483)[2208], 31th May 1986; & JP-A-61 4820 (YAMAHA HATSUDOKI K.K.) 10-01-1986**

**PATENT ABSTRACTS OF JAPAN, vol. 10, no. 109 (M-472)[2166], 23th April 1986; & JP-A-60 240 828 (NISSAN JIDOSHA K.K.) 29-11-1985**

(73) Proprietor: **HONDA GIKEN KOGYO KABUSHIKI KAISHA**
**1-1, 2-chome Minami-Aoyama**
**Minato-ku Tokyo(JP)**

(72) Inventor: **Yamamoto, Hitoshi**
**5-8-12, Nakamuneoka**
**Shiki-shi Saitama(JP)**
Inventor: **Toriyama, Masayuki**
**1-20-41-102, Niikura Wako-shi**
**Saitama(JP)**
Inventor: **Ikegami, Masahiko**
**2-28-17, Tagara Nerima-ku**
**Tokyo(JP)**

(74) Representative: **Fincke, Karl Theodor, Dipl.-Phys.Dr. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

EP 0 287 038 B1

## Description

Industrial Utilization Field

The present invention relates to an exhaust timing controlling device for a two-cycle engine.

Prior Art

In general, engines used for vehicles etc., are broadly classified into a low revolution type which lays emphasis on power characteristics during low speed running (low revolution) and a high revolution type which lays emphasis on power characteristics during high speed running (high revolution). The first-mentioned type of engine is constructed so that the peak of the engine output is obtained in a low revolution range, while the latter constructed so that the engine output peak is obtained in a high revolution range. However, in the former, once the engine output reaches a certain limit, it does not increase any more, while in the latter, the engine output in the low revolution range is low in comparison with that in the former.

In view of the above, studies have been made to increase the engine output in low and medium revolution ranges while maintaining a high output in the high revolution range to thereby improve the power characteristics in a wide revolution range covering from a low speed range (low and medium revolutions) to a high speed range (high revolutions). As an example of concrete means for attaining this, it has been proposed to change the engine exhaust timing at low revolution and that at high revolution with respect to each other.

In a two-cycle engine, an exhaust port is opened by movement of a piston toward the bottom dead center to provide communication between the exhaust passage and the interior of the cylinder. In this way there is performed the exhaust operation. In this connection, to change the exhaust timing as mentioned above, it is necessary that the position of the upper edge of the exhaust port (the top dead center side of the piston and the bottom dead center side thereof will hereinafter be regarded as being up or upper and down or lower, respectively) be changed along the moving direction of the piston.

Heretofore, concrete means for opening and closing the upper portion of an exhaust port have already been proposed as shown, for example, in Japanese Patent Publication No. 36047/72 and Utility Model Publication No. 36818/83.

In the former, an arcuate movable plate disposed near an exhaust port of the exhaust passage is supported by a rocking lever which is positioned in the exhaust passage, and it is moved up and down along the moving direction of the piston by rocking motions of the lever, whereby the movable plate is selectively positioned either in the upper portion of the exhaust port or in a recess formed in a lower inner wall portion of the exhaust passage to effect a positional change of the upper edge of the exhaust port. On the other hand, in the latter, a control valve which is semicircular in section is disposed pivotally near the upper portion of an exhaust port and a part of its outer peripheral surface is projected and retracted with respect to the upper portion of the exhaust port by pivotal motions of the control valve to open and close the said upper portion, thereby changing the timing of communication between the exhaust passage and the interior of the cylinder.

A control device for a two-cycle engine capable of controlling the exhaus timing is known, for example from Japanese Patent Laid Open No. 20623/87.

In the control device for a two-cycle engine disclosed in the above publication there is adopted a construction in which when the engine speed has reached a predetermined value or higher, the exhaust timing is retarded to a predetermined point to suppress the engine output, thereby preventing the engine speed from increasing beyond a predetermined level, that is, preventing the engine from being damaged by overrotation.

In such conventional control device for a two-cycle engine, however, since the exhaust timing is retarded to a predetermined point immediately when the engine speed reaches a predetermined value or higher, there occur sudden drop of the engine speed and output, causing the driver to feel uncomfortableness.

In the Abstract of JP-A-61 4820 is shown a map-controlled exhaust timing valve apparatus in which the position of the exhaust timing valve can be determined experimentally according to rpm and throttle valve position. The determination can also include the consideration of safety and comfort to avoid drastic changes of engine output for small variations of rpm and throttle valve angle. There can be chosen experimentally determined valve positions, limiting valve movements between adjacent map points or interpolation procedures for determining valve positions, for rpm (and/or throttle valve positions) not exactly coinciding with the rpm values of the map.

Problem to be Solved by the Invention

The present invention intends to solve the following problem involved in the above prior art.

In a two-cycle engine like the one explained above, the engine characteristic can be converted to a low revolution, high output type by controlling the movable plate or the control valve when the engine speed is in the low revolution range. In designing an engine, therefore, it is possible to make design so that as high an output as possible is obtained in the high revolution range, without considering the decrease of output in the low revolution range. And it is possible to obtain a maximum output which is much larger than that in the prior art.

On the other hand, however, unit quantity of heat generated increases because a high output is obtained in the high revolution range, and when the engine is operated at high revolution for over a certain time, the temperature of the combustion chamber rises to a level higher than a predetermined level, resulting in that it is no longer possible to effect ideal combustion.

Such inconvenience can be avoided by designing an engine at a lower maximum output. In this case, however, it is impossible to meet the demand for an engine of a large maximum output.

The present invention which has been accomplished in view of the above circumstances aims under a first aspect at providing an input or exhaust timing control device capable of setting a large maximum output and avoiding the invonvenience that the combustion chamber temperature rises higher than a predetermined value as the engine operation is continued long in the high revolution range and under a second aspect at providing an input or exhaust timing control device capable of diminishing the engine load and protecting the engine without causing uncomfortableness to the driver.

## Means for solving the problem

Means for solving the problem are stated in the appended claims.

## Brief Description of the Appending Drawings.

Fig. 1 to 5 illustrate a first embodiment of the present invention.
Fig. 1 is a longitudinal sectional view showing a principal portion of a two-cycle engine,
Fig. 2 is a sectional view taken on line II-II of Fig. 1,
Fig. 3 is an engine characteristic diagram explanatory of the operation of an exhaust timing controlling device,
Fig. 4 is a diagram showing control valve opening vs. engine speed,
Fig. 5 is a flow chart explanatory of operation,
Figs. 6 and 7 illustrate a second embodiment of the present invention,
Fig. 6 is a diagram showing control valve operation timing vs. engine speed, and
Fig. 7 is a flow chart explanatory of operation,

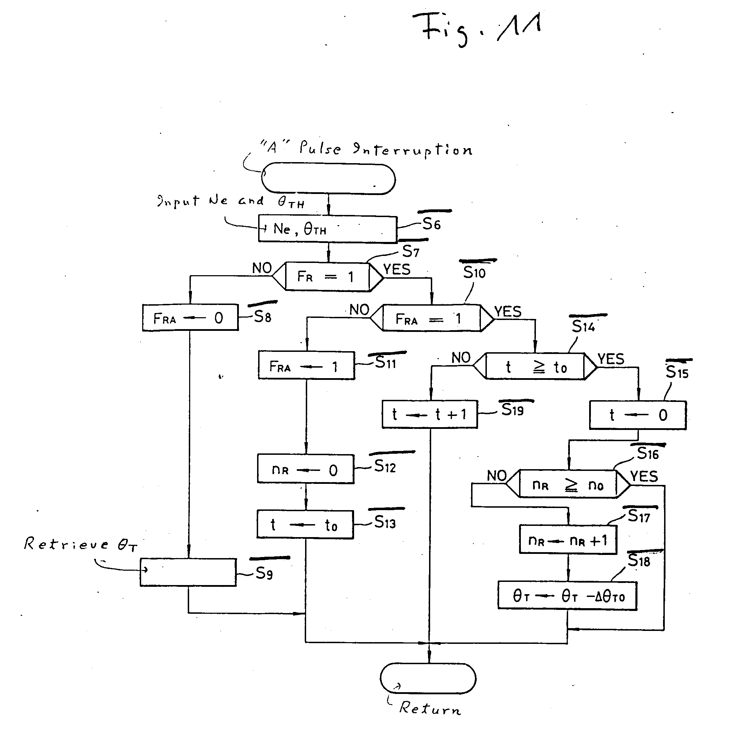

Fig. 8 is a partially sectional view of a third embodiment of the present invention,
Fig. 9 is a block diagram of a system embodying the present invention according to Fig. 8, and
Figs. 10 to 14 are flow charts showing operations of the system illustrated in Fig. 9.

Specification of Embodiments:

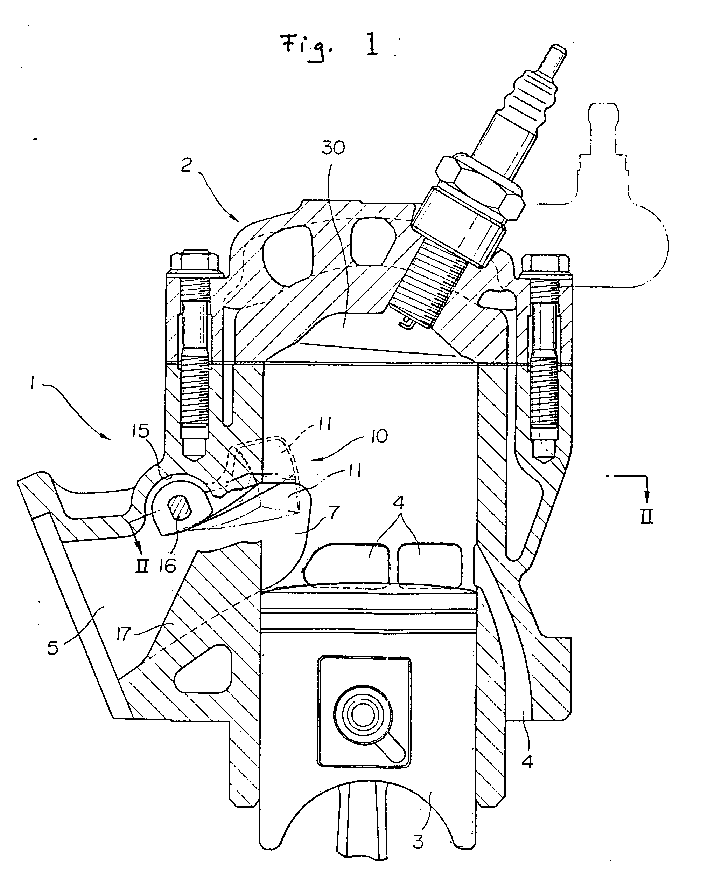

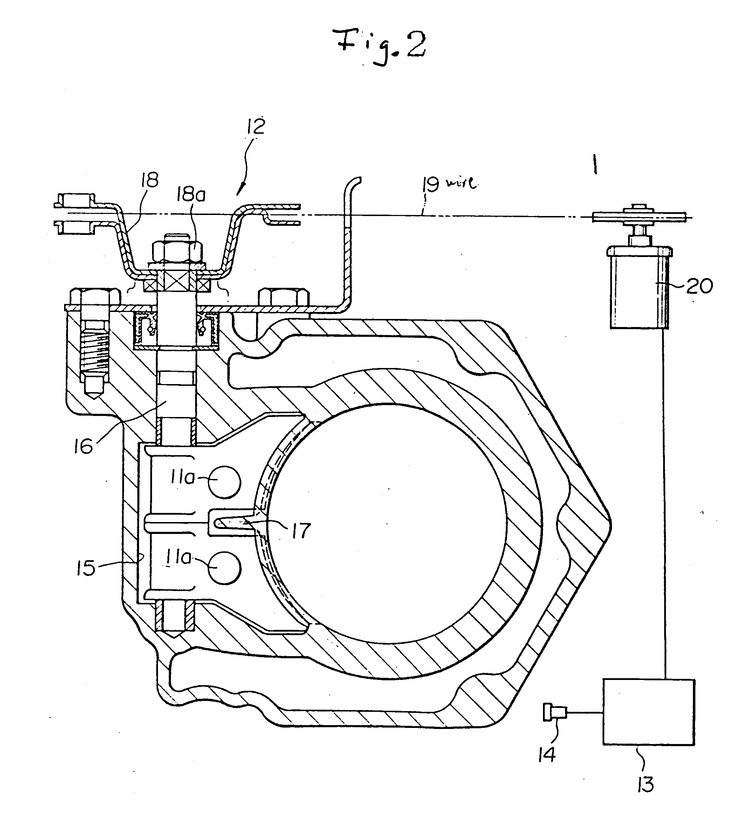

In Figs. 1 and 2, the reference numeral 1 denotes a cylinder block; numeral 2 denotes a cylinder head; numeral 3 denotes a piston slidably inserted into the cylinder; numeral 4 denotes a scavenging passage; and numeral 5 denotes an exhaust passage. A control valve 11, which is a component of an exhaust timing controlling device 10, is mounted to an upper wall of the exhaust passage 5 in a position close to an exhaust port 7.

The exhaust timing controlling device 10 includes the control valve 11 which is mounted to the upper wall of the exhaust passage 5 to open and close the upper portion of the exhaust port 7; as well as, as shown in Fig. 2, a drive means 12 for opening and closing the control valve 11 through a rotatable shaft 16 and a controller 13 for controlling the drive means 12. To the controller 13 is attached an engine speed detecting means 14 for detecting the number of revolutions of the engine. In accordance with an output signal provided from the engine speed detecting means 14, the controller 13 generates a signal for operating the control valve 11 in an opening direction when the engine speed is in a low revolution range (A - C) which is within several thousand revolutions, including idling revolutions; or the controller 13 generates a signal for operating the control valve 11 in a closing direction when the engine speed has reached a medium revolution range (C - D) beyond the low revolution range; or generates a signal for operating the control valve 11 in an opening direction when the engine speed has reached a high revolution range (D - I) beyond the medium revolution range; further, the controller 13 generates a signal for moving the control valve 11 back to an intermediate opening position (m) temporarily when the engine has been retained for over a certain time in a high revolution range (F - I) including revolutions H at which the maximum output is exhibited, thereby operating the control valve 11 through the drive means 12.

The details of the above will now be described. In the upper wall of the exhaust passage 5, as shown in Figs. 1 and 2, there is formed a recess 15 over a predetermined distance from near the exhaust port 7 toward the downstream side, the recess 15 being open into the exhaust passage 5, and the rotatable shaft 16 extends in a direction perpendicular to the axis of the cylinder block 1 through the downstream-side end portion of the recess 15. There is further provided a rib 17 extending from the exhaust port 7 toward the downstream side so as to divide in two each of the exhaust port 7 and the exhaust passage 5 in the circumferential direction of the cylinder block 1.

The control valve 11, which is generally plate-like, is divided in two in the circumferential direction of the cylinder block 2 and the respective one end portions are connected to the rotatable shaft 16 so that their relative rotation is inhibited. Thus, the divided portions are disposed on both sides of the rib 17. Further, with reciprocative rotation within a predetermined angular range of the rotatable shaft 16, the control valve 11 is rotated synchronously, centered on the shaft 16. As indicated with chain line in Fig. 1, moreover, the control valve 11 is so shaped as to be received in the recess 15 when it has been turned up to its upper rotational limit, and its rotating-side end portion is curved at a curvature approximately equal to that of the inner peripheral surface of the cylinder so that it becomes substantially contiguous to the inner peripheral surface of the cylinder as shown in Fig. 2 when it has been turned to its lower rotational limit. On the other hand, the rotational center-side end portion of the control valve 11 is so formed as to provide sealing function between it and the inner wall surface of the recess 15 and to provide a gap which permits the rocking motion of the control valve 11 itself. Further, the under surface of the control valve 11 is curved so as to become contiguous to the inner surface of the exhaust passage 5 when the control valve 11 is received in the recess 15.

The thus-formed control valve 11 closes the upper portion of the exhaust port 7 when it is projected from the recess 15 and is positioned in its lower rotational limit, while when the control valve 11 is positioned in its upper rotational limit, it opens the upper portion of the exhaust port 7.

Approximately centrally of the control valve 11 are formed through holes 11a, which function to conduct the exhaust gas flowing through the exhaust passage 5 up to the space between the control valve 11 and the recess 15 formed thereabove to prevent the deposition of carbon on this portion.

On the other hand, one end portion of the rotatable shaft 16 is projected to the exterior through the wall of the cylinder block 1, and to this projected portion is fixed a wire guide 18 with a bolt 18a, the wire guide 18 being connected to a drive source 20, e.g. servomotor, through a wire 19. The wire guide 18, wire 19 and drive source 20 constitute the drive means 12 which is for driving the control valve 11 through the rotatable shaft 16.

The engine speed detecting means 14 connected to the controller 13 is, for example, a pulse generator attached to the crank shaft (not shown) of the two-cycle engine, which pulse generator generates pulses according to the number of revolutions of the engine and provides an electric signal proportional to the number of the said pulses to the controller 13 which is located behind the detecting means.

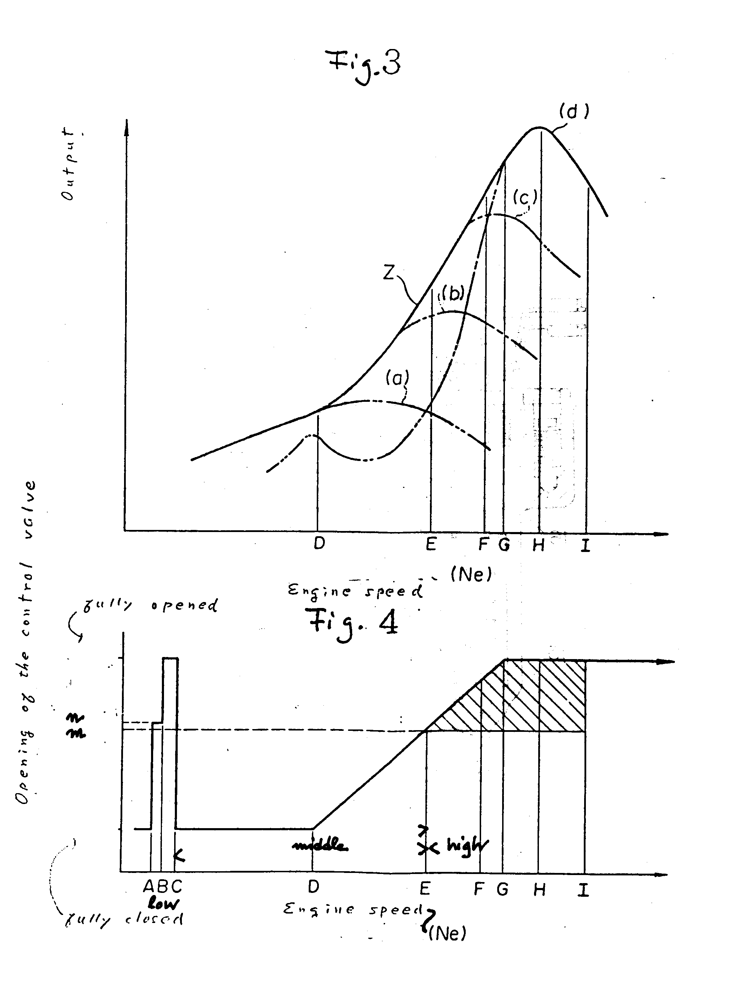

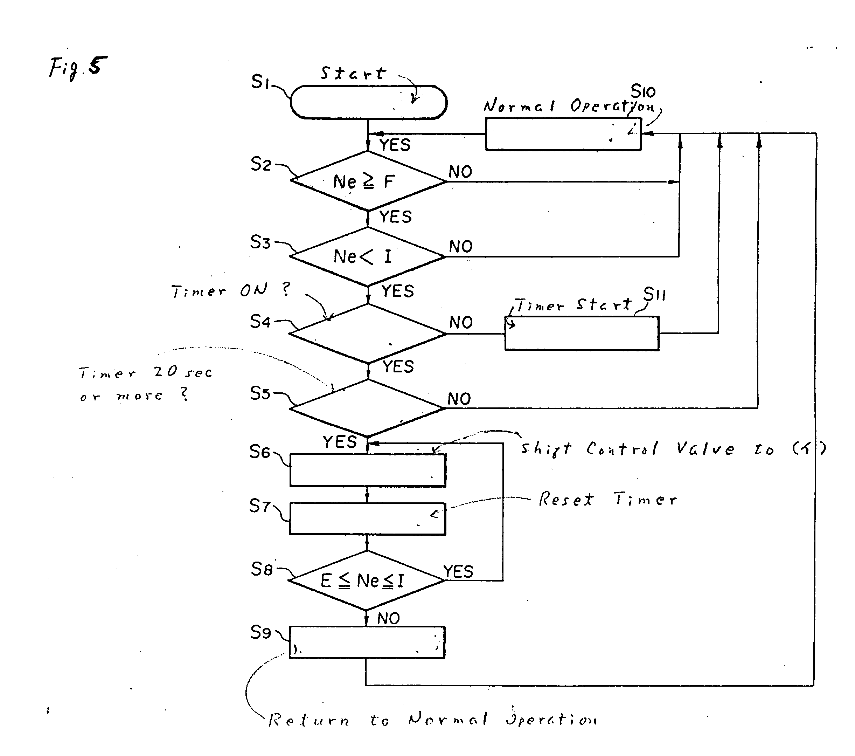

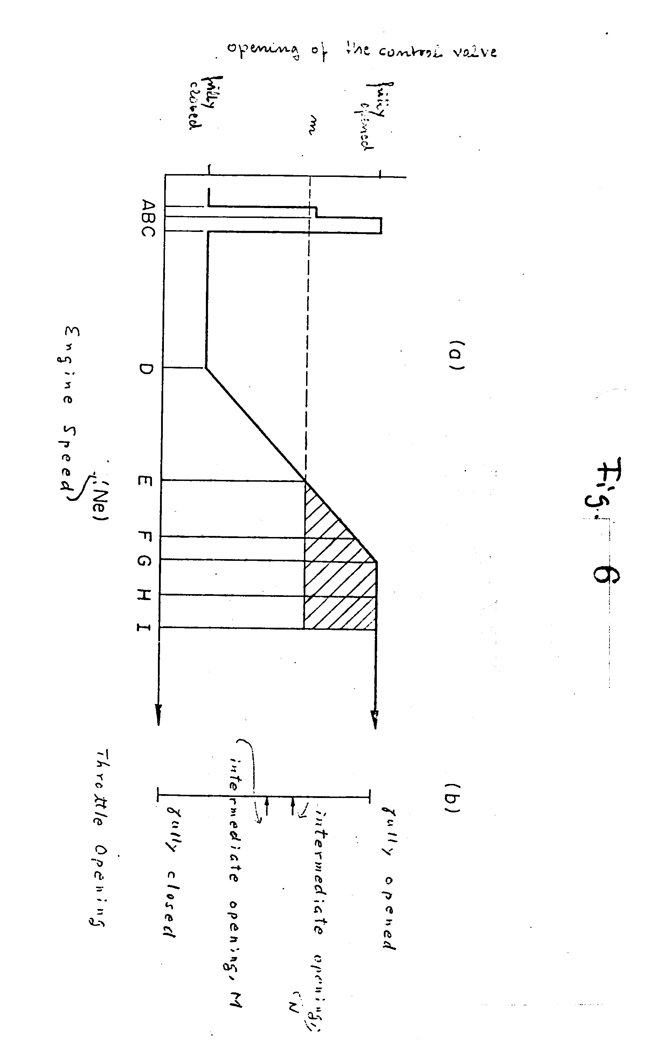

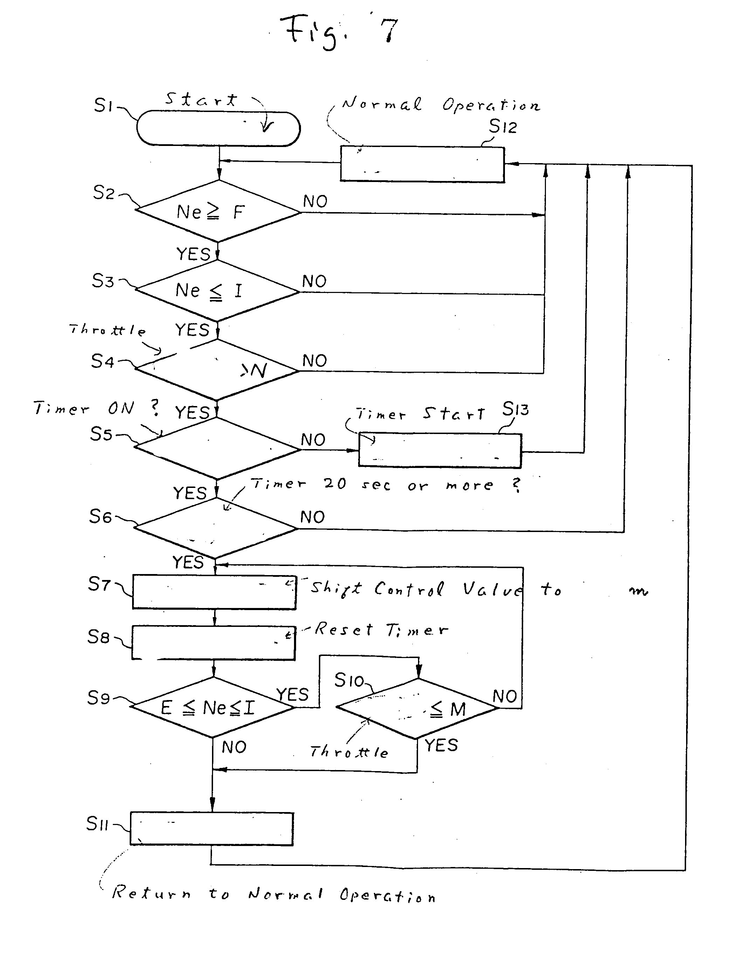

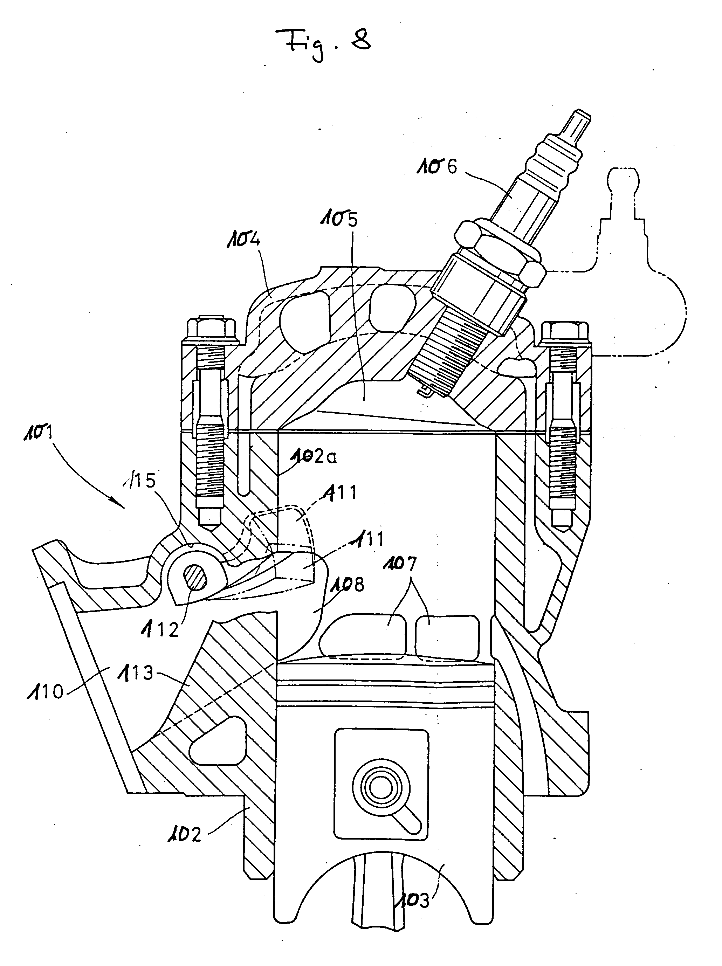

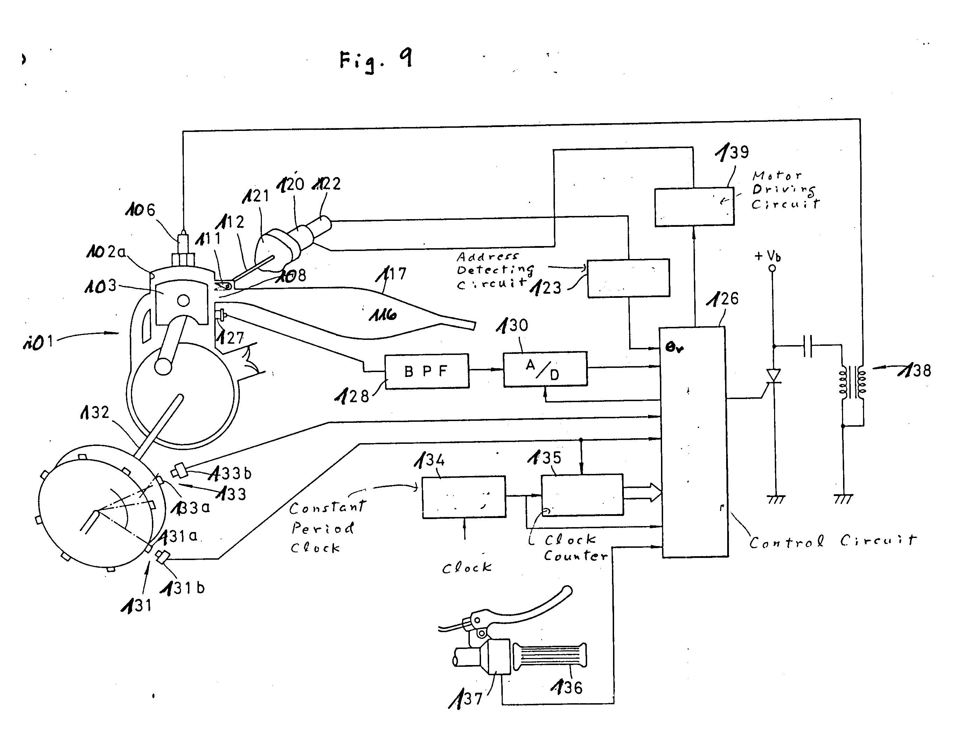

To the controller 13, as shown in Fig. 4, are pre-input an engine speed A which is the lower limit of several thousand revolutions including idling revolutions, an engine speed B which is close to the upper limit, an engine speed C which is the upper limit, an engine speed D which belongs to a medium revolution range, and engine speeds E to I which belong to a high revolution range.

Two signals, when classified broadly, are provided from the controller 13 to the drive means 12. One is a first signal which is generated in response to only a change in the engine speed and the other is a second signal which is generated in preference to the first signal to prevent the temperature of a combustion chamber 30 of the engine from rising beyond a predetermined value.

The first signal is classified into a signal which is provided to the drive means 12 to let the control valve 11 occury the fully closed position when the engine speed is below A; a signal which is provided to the drive means 12 to let the control valve 11 occupy the intermediate opening position (n) between the fully open position and the fully closed position when the engine speed is not lower than A and below B; a signal which is provided to the drive means 12 to let the control valve 11 assume the fully open position when the engine speed is not lower than B and below C; a signal which is provided to the drive means 12 to let the control valve 11 assume the fully closed position when the engine speed is not lower than C and below D; and a signal which is provided to the drive means 12 to increase the opening of the control valve 11 gradually from the fully closed position toward the fully open position according to the number of revolutions of the engine when the engine speed is not lower than D and below G, or let the control valve 11 assume the fully open position when the engine speed has reached G or higher.

The second signal is for returning the control valve 11 to a predetermined intermediate opening position (m) when the engine speed has been held in a predetermined high revolution range (not lower than F and below I) including revolutions G at which the maximum engine output is exhibited, for a predetermined period of time, or when a predetermined time has elapsed from the time when the engine speed entered the above revolution range until when it again entered the same range after having once got out of the said range. This signal is terminated when the engine speed has decreased below the revolutions E which corresponds to the state of the control valve 11 occupying the position (m), or when the engine speed has increased to a level not lower than I.

Thus, in this embodiment, the temperature of the combustion chamber 30 is not measured actually, but instead conditions in which the temperature of the combustion chamber 30 rises above a predetermined level are determined experimentally or by any other suitable means in advance, and the control valve 11 is operated on the basis of the parameters of engine speed and time so that the said conditions are not satisfied.

The following description is now provided about the operation of the exhaust timing controlling device of this embodiment constructed as above.

When the two-cycle engine is off, the control valve 11 is located in the fully closed position and is held in a closing state for the upper portion of the exhaust port 7.

In this state, upon start-up of the two-cycle engine, the number of revolutions of the engine is detected by the engine speed detecting means 14 and information on this engine speed is converted to an electric signal, which is fed to the controller 13.

When the engine speed has reached A or higher, this information is provided from the engine speed detecting means 14 to the controller 13 and a drive signal is provided from the controller 13 to the drive source 12, whereby the control valve 11 is rotated up to the intermediate position (n) between the fully closed position and the fully open position. The reason why the position of the control valve 11 is shifted to the intermediate position (n) is that it is intended to substantially raise the upper edge position of the exhaust port 6 to reduce the compression ratio, thereby improving the fresh air exchange rate in the vicinity of the idling revolution range and decreasing irregular combustion and the resulting variation of torque. And the reason why the control valve 11 is held in the intermediate position without being fully closed in the low revolution range is that it is intended to take balance between reducing the compression ratio to diminish the variation of torque as mentioned above and minimizing the combustion sound which tends to become large when the control valve 11 is fully opened to the high speed side in the low revolution range.

Then, when the engine speed has reached B or higher, a drive signal is provided from the controller 13 to the drive means 12 to let the latter shift the control valve 11 once up to the fully open position and then in the closing direction. The reason why the control valve 11 is once shifted to the fully open position is that carbon which is apt to be deposited on the control valve 11 is to be scraped off forcibly by sliding contact between the control valve 11 and the inner surface of the recess 15.

Further, when the engine speed has reached C or higher, a drive signal is provided from the controller 13 to the drive means 12 in accordance with a signal provided from the engine speed detecting means 14 to shift the control valve 11 back to the fully closed position. As a result, the upper edge position of the exhaust port 7 substantially descends and the exhaust timing is controlled so that high output is obtained when the engine speed reaches the intermediate revolution range (see Fig. 3(a)).

On the other hand, when the engine speed has exceeded D, the control valve 11 is opened gradually from the fully closed condition and is held in the fully open position when the engine speed has reached G, whereby the exhaust timing of the two-cycle engine 1 is rendered appropriate in the high revolution range (the engine output varies continuously according to revolutions of the engine like Fig. 3 (a) - (d)).

By performing the above operations according to revolutions of the two-cycle engine there can be attained improvement of the output characteristic, indicated by Z, over a wide revolution range from low to high revolutions.

In the above controller, moreover, the following control is made when the engine has been operated over a certain time in the predetermined high revolution range.

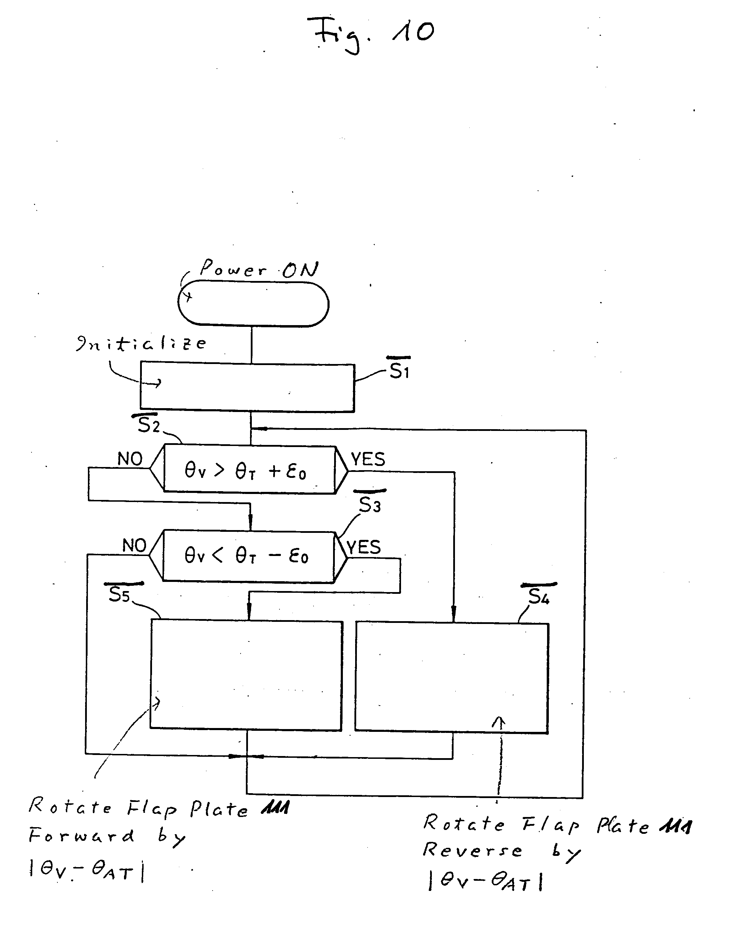

Explanation will be made below about this control with reference to the flow chart of Fig. 5.

$S_1$: The control system is operated upon turning ON of a main switch which is provided in the vehicle.

$S_2$: Judgment is made as to whether the engine speed is not lower than F or not and if the answer is "YES", execution passes to the next step $S_3$, while if the answer is "NO", execution returns to a normal operation of step $S_{10}$, that is, a control in which the first signal is generated according to the engine speed to open or close the control valve 11.

$S_3$: Judgment is made as to whether the engine speed is below I or not and if the answer is "YES", execution passes to the next step $S_4$, while if the answer is "NO", execution returns to step $S_{10}$.

$S_4$: Judgment is made as to whether the timer is in operation or not and if the answer is "YES", execution passes to the next step $S_5$, while if the answer is "NO", the timer is started and thereafter execution returns to step $S_{10}$.

$S_5$:  Judgment is made as to whether the timer indicates a predetermined time or longer, or not, and if the answer is "YES", execution passes to the next step $S_6$, while if the answer is "NO", execution returns to step $S_{10}$.

$S_6$:  A predetermined signal is provided to the drive means 12 to shift the control valve 11 to the intermediate opening position ($\tau$). As a result, the engine output decreases and the temperature in the combustion chamber falls.

$S_7$:  The timer is reset.

$S_8$:  Judgment is made as to whether the engine speed is within the range of E to I or not and if the answer is "YES", execution passes to step $S_9$, while if the answer is "NO", execution returns to step $S_6$ to hold the control valve 11 in position ($\tau$).

$S_9$:  Execution returns to the normal operation, that is, to step $S_{10}$, whereby the control valve 11 is again operated in the opening or closing direction according to the engine speed.

Thus, in the above operation, when the engine speed has been held in the region of not lower than F and below I for a predetermined time or longer, or upon lapse of a predetermined time from the time when the engine speed once entered the above range to operate the timer until when it got out of the same range and again returned thereto, the second signal is generated to retain the control valve 11 in the intermediate opening position (m) forcibly. The forced holding of the control valve 11 in the intermediate position (m) is relieved when the engine speed has become below E or not lower than I. Consequently, the engine will never be used over a predetermined time in the range (not lower than F and below I) which corresponds to the severest condition and it is possible to prevent the increase in temperature of the combustion chamber 30, thus permitting good combustion always in the combustion chamber. The reason why the above embodiment is so constructed as to have the control valve 11 returned only up to the intermediate opening position is because with even such control valve it is possible to effect cooling of the engine to a satisfactory extent and also because the lowering of the engine output is to be minimized.

Second Embodiment

Figs. 6 and 7 illustrate a second embodiment of the present invention. In this embodiment, like the first embodiment, the control valve is returned to the intermediate opening position when the engine speed has been held in the range of not lower than F and below I for a predetermined time. Besides, the condition that the throttle opening should be not smaller than N is added to this second embodiment. The reason is as follows. For example, during vehicular running along a downward slope, there is the case where the engine speed reaches a high level even in a throttled condition, and in this case the combustion in the combustion chamber 30 is prevented from becoming excessive despite the engine speed being high and so the temperature of the combustion chamber does not rise beyond a predetermined level.

In connection with the operation of the controller used in this embodiment, only the points which are different from the first embodiment will be explained below with reference to Fig. 7.

Steps $S_1$, $S_2$ and $S_3$ are the same as in the previous embodiment.

$S_4$:  Judgment is made as to whether the throttle opening is not smaller than the predetermined intermediate opening N or not and if the answer is "YES", execution passes to the next step $S_5$, while if the answer is "NO", execution returns to the normal operation.

$S_9$:  Judgment is made as to whether the engine speed is within the range of E to I or not when the control valve 11 has been returned to the intermediate position, and if the answer is "NO", execution passes to the next step $S_{11}$, while if the answer is "YES", execution passes to a newly added step $S_{10}$.

$S_{10}$:  Judgment is made as to whether the throttle opening is lower than a predetermined intermediate opening M which is lower than the opening N, and if the answer is "YES", execution passes to the next step $S_{11}$, while if the answer is "NO", execution returns to step $S_7$. Thus, even where the judgment in step $S_9$ is "YES", that is, even where the engine speed is not outside the range of E to I, execution is returned to the normal operation when the throttle opening has become lower than the predetermined value M. In other words, where the throttle opening is lower than M, it is judged that the temperature in the combustion chamber 30 has not reached a certain level.

The shapes and sizes of the components shown in the above embodiments are mere examples and may be modified according to the type of the two-cycle engine 1 to which the invention is applied, requirements in design for the engine etc.

For example, the engine speed which is set to each of the foregoing revolution ranges is changed according to specifications, etc. of vehicles or two-cycle engines. Also, the intermediate position (m) to which the control valve 11 is returned forcibly during operation in the high revolution range, may be changed according to the relation between the cylinder inside diameter and the stroke distance, both determining the stroke volume of the two-cycle engine 1. In some particular condition, the control valve 11 may be returned up to the fully closed position. Moreover, the detection of the engine speed may also be effected by detecting ignition pulse in the engine. Further, the actuator is not limited to an electrically controlled one. For example, there may be used an actuator which utilizes fluid pressure, e.g. air pressure.

Although in the above embodiment there is made control to lower the control valve 11 when the engine speed has been held in the range of not lower than F and below I, the control is not limited thereto. Control may be made so that upon direct detection of the temperature of the combustion chamber 30 or of the exhaust passage 5, the second signal is generated in accordance with the thus-detected signal to shift the control valve 11 to the intermediate opening position or the fully closed position.

According to the first and the second embodiment of the exhaust timing controlling device as set forth hereinabove, for example when the engine speed has been held in a predetermined high revolution range including revolutions at which the maximum output is exhibited, for a certain time and the temperature in the combustion chamber is about to rise beyond a predetermined level the drive means operates in accordance with a signal provided from the controller to return the control valve to a predetermined intermediate opening position forcibly temporarily so that the engine output lowers and the combustion chamber temperature is prevented from rising. Consequently ideal combustion can be effected even when the maximum output is set high.

In the embodiment as shown in Fig. 8, in a two-cycle engine 101, a cylinder 102a is formed in a cylinder block 102 and a piston 103 is inserted into the cylinder 102a. The piston 103 slides vertically in a reciprocative manner through the cylinder 102a. A spark plug 106 which faces a combustion chamber 105 is threadedly fitted in a cylinder head 104 which closes the upper end of the cylinder 102a. The cylinder 102a is formed with scavenging ports 107 and exhaust port 108. The exhaust port 108 is formed in a position in which it becomes fully open when the piston 103 is in the vicinity of the bottom dead center, and it is in communication with an exhaust passage 110.

Near the upper edge of the exhaust port 108 of the cylinder block 102 which forms the exhaust passage 110, there is rotatably provided a flap plate 111 serving as an exhaust timing control valve which is connected to a rotatable shaft 112. The free end portion of the flap plate 111 is positioned in the upper edge of the exhaust port 108 so that it forms the upper edge of the same port. As illustrated, the flap plate 111 is formed generally plate-like and is divided in two in the circumferential direction of the cylinder 102a to adapt itself to a rib 113 which divides in two both the exhaust port 108 and the exhaust passage 110 in the circumferential direction of the cylinder 102a. The free end portion on the rocking side of the flap plate 111 is curved at about the same curvature as that of the circumferential surface of the cylinder 102a and it is so formed as to have a surface which spreads substantially along the vertical direction of the cylinder 102a. Therefore, the free end portion of the flap plate 111 forms a surface which is substantially contiguous to the inner peripheral surface of the cylinder 102a and the exhaust timing is adjusted by rocking motions of the flap plate 111. A recess 115 capable of receiving the flap plate 111 therein is formed near the upper edge portion of the exhaust port 108.

As shown in Fig. 9, an exhaust pipe 117 having an expansion chamber 116 is in communication with the exhaust port 108. The expansion chamber 116 is formed so that its central portion in the exhaust gas flowing direction is expanded and both end portions thereof constricted. This shape permits utilization of the so-called action of exhaust reflection wave, namely: When the exhaust port opens abruptly, the cylinder pressure gives rise to a positive pressure wave which moves away down the exhaust chamber at the speed of sound. The expansion chamber is designed to make use of this pressure wave and its behaviour. Its action helps scavenge the old charge from the cylinder, prevents loss of the fresh charge into the exhaust chamber and raises the pressure of that fresh charge.

The rotatable shaft 112 which carries the flap plate 111 thereon is an output shaft of a reduction gear 121 which is for reducing the rotational output of a pulse motor 120 and the free end portion of the flap plate 111 is positioned in the upper edge of the exhaust port 108 to form the same edge. Consequently, the upper edge position of the exhaust port 108 shifts vertically with rocking motions of the flap plate 111, thus permitting the exhaust timing to be changed. An encoder 122 for detecting an operation condition of the pulse motor 120 is attached to the same motor and an output signal from the encoder 122 is fed to an address detecting circuit 123, which in turn provides an address signal indicative of an operating position of the pulse motor 120 to a control circuit 126.

Further, a vibration sensor 127 for detecting vibration of the engine 101 and generating a vibration signal according to the vibration is attached to the side face of the cylinder block or the cylinder head. The vibration signal from the vibration sensor 127 is fed to a band pass filter (hereinafter referred to simply as "BPF") 128 which allows the passage of only vibration signals of the frequency band peculiar to knocking. So only vibration signals peculiar to knocking are fed as knocking level signals to the control circuit 126 through an A/D converter 130.

On the other hand, a synchronizing pulse generating means 131 generates a rotational angle position signal (hereinafter referred to as "B pulse") which is synchronized with the rotation of a crank shaft 132 of the engine. More specifically, it is a rotor which rotates in synchronism with the rotation of the crank shaft 132, and means which combines a rotor having a number of pawls 131a with a magnetic pick-up 131b to obtain B pulse as an output signal of the magnetic pick up 131b is well known.

A reference position pulse generating means 133 generates a reference rotational angle position signal (hereinafter referred to as "A pulse") which indicates that the crank shaft 132 has reached a predetermined rotational angle position, i.e., a reference rotational angle position, before TDC (top dead center of the piston). The A pulse can be obtained by providing the rotor as the synchronizing pulse generating circuit 131 with a pawl 133a for the A pulse separately and combining it with an A pulse producing magnetic pick-up 133b.

A constant period clock 134 generates a clock pulse of a predetermined period by, for example dividing the frequency of a clock signal which is provided from a high frequency clock source (not shown). The clock pulse thus generated is fed to a clock counter 135, which in turn counts constant period clock pulses after it has been cleared by B pulse. That is, the count value obtained by the clock counter 135 indicates elapsed time after the generation of B pulse.

The control circuit 126 is constituted, for example, by a microcomputer containing CPU, ROM and RAM, and it performs arithmetic operations in accordance with a main routine or an interruption subroutine as will be described later. Further, a throttle signal corresponding to a rotated position of a throttle grip 136 is fed from a throttle sensor 137 to the control circuit 126, as a parameter indicative of the throttle valve opening of the engine 101.

The control circuit 126 calculates a desired ignition angle $\theta_{IG}$ and a target rotational angle position (hereinafter referred to as "target exhaust an-tion (hereinafter referred to as "target exhaust angle") $\theta_T$ which corresponds to a target exhaust timing at which the exhaust port 108 should begin to open, in accordance with both an engine speed Ne which is calculated on the basis of the B pulse and the throttle signal. Then, on the basis of the results of the calculation the control circuit 126 triggers an ignition system 138 to induce spark discharge of the spark plug 106 and at the same time it drives the pulse motor 120 to adjust the exhaust timing via a motor driving circuit 139.

Figs. 10 to 14 are flow charts showing main and subroutines for setting the target exhaust angle $\theta_T$ in the control circuit 26.

As shown in Fig. 10, upon application of power, a main routine is executed successively step by step in accordance with constant period clock pulses in the control circuit 126. First, in step $\overline{S_1}$ initialization takes place. Then comparison is made between the present exhaust angle $\theta_V$ which is calculated in accordance with an address signal provided from the address detecting circuit 123 and the target exhaust angle $\theta_T$ which is obtained by the execution of a later-described subroutine (steps $\overline{S_2}$ and $\overline{S_3}$), and where the difference between the two is larger than a predetermined value $\epsilon_O$, the pulse motor 120 is driven by an angle corresponding to the difference (steps $\overline{S_4}$ and $\overline{S_5}$).

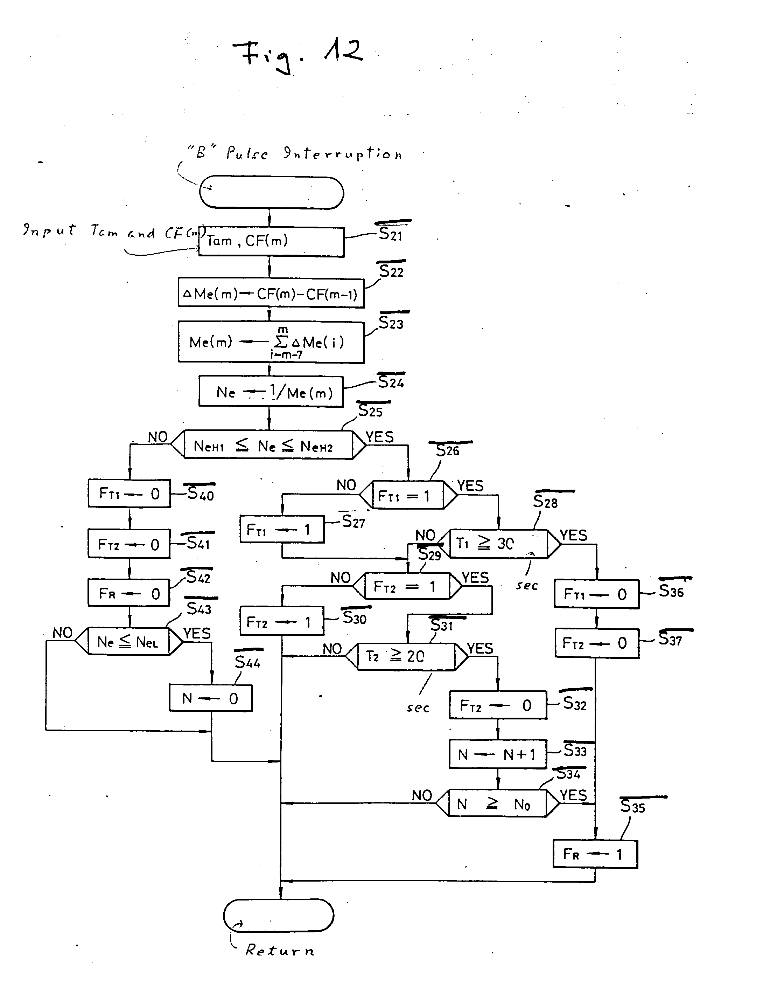

Fig. 11 shows an A pulse interruption subroutine which interrupts the above main routine upon generation of A pulse in the reference position pulse generating means 133. According to this subroutine, the main routine is interrupted upon generation of A pulse and the engine speed Ne and the throttle valve opening $\theta_{TH}$ are input (step $\overline{S_6}$). The engine speed Ne is a value obtained by the execution of a later-described B pulse interruption subroutine, while the throttle valve opening $\theta_{TH}$ is a value obtained from the throttle sensor 137. Then, judgment is made as to whether "1" is set to a retard flag $F_R$ or not (step $\overline{S_7}$). The retard flag indicates whether the exhaust timing should now be deviated to a retard side from a maximum output generation timing which is set on the basis of the engine speed Ne and the throttle valve opening $\theta_{TH}$, as will be described in more detail later. In this state, "1" is set. Where "1" is not set to the retard flag $F_R$ in step $\overline{S_7}$, a retard continuation flag $F_{RA}$ which indicates whether the control (hereinafter referred to as the "retard control") for deviating the exhaust timing from the maximum output generation timing to the retard side is being continued or not, is reset (step $\overline{S_8}$). Then, in accordance with the engine speed Ne and throttle valve opening $\theta_{TH}$ which were input in step $\overline{S_6}$, a target exhaust angle $\theta_T$ corresponding to the maximum output generation timing at which the maximum output is produced at that engine speed Ne, is retrieved on the basis of a pre-stored map (step

$\overline{S_9}$).

Where "1" is set to the retard flag $F_R$ in step $\overline{S_7}$, judgment is made as to whether "1" is set to the retard continuation flag $F_{RA}$ or not (step $\overline{S_{10}}$). When "1" has just been set to the retard flag $F_R$ and the control for retarding the exhaust timing from the maximum output generation timing has not been performed yet, this indicates that "1" is not set to the retard continuation flag $F_{RA}$, so execution passes to step $\overline{S_{11}}$, in which "1" is set to the flag $F_{RA}$. Then, a count value $n_R$ which indicates how many times the exhaust timing was retarded each in an predetermined amount during the retard control, is reset (step $\overline{S_{12}}$) and $t_O$ is set to a count value $t$ which indicates how many times the A pulse interruption subroutine was executed during the retard angle control (step $\overline{S_{13}}$).

Where the A pulse interruption subroutine is executed upon generation of the next A pulse in the above manner, it is confirmed in step $\overline{S_{10}}$ that "1" is set to the retard continuation flag $F_{RA}$, and judgment is made as to whether the count value $t$ is not smaller than $t_O$ or not (step $\overline{S_{14}}$). Where $t_O$ has just been set to the count value $t$ in step $\overline{S_{13}}$, that is, where the retard control has just been started, the count value $t$ inevitably becomes $t_O$ or larger, so execution advances from step $\overline{S_{14}}$ to step $\overline{S_{15}}$, in which the count value $t$ is reset. Then, judgment is made as to whether the count value $n_R$ is not smaller than a predetermined number of times $n_O$ (step $\overline{S_{16}}$). If the count value $n_R$ is smaller than $n_O$, the count value $n_R$ is incremented by one (step $\overline{S_{17}}$) and a predetermined angle $\Delta\theta_{TO}$ is subtracted from the target exhaust angle $\theta_T$ which was obtained in step $\overline{S_9}$ to establish a new target exhaust angle $\theta_T$ (step $\overline{S_{18}}$). Thus, by subtracting the predetermined angle $\Delta\theta_{TO}$ from the target exhaust angle $\theta_T$ which corresponds to the maximum output generation timing, the exhaust timing is retarded from the maximum output generation timing by an angle corresponding to the predetermined angle $\Delta\theta_{TO}$.

Next, where the A pulse interruption subroutine is executed, the result of the judgment in step $\overline{S_{14}}$ becomes "NO" because the count value $t$ is reset in step $\overline{S_{15}}$, then execution passes to step $\overline{S_{19}}$, in which the count value $t$ is incremented by one (step $\overline{S_{19}}$).

Thus, the time interval of the execution of step $\overline{S_{18}}$ is made long during the retard control by using the count value $t$. More specifically, a retard control is made by a predetermined amount ($\Delta\theta_{TO}$) at every lapse of a predetermined time after the A pulse interruption subroutine has been executed to times, whereby the exhaust timing is retarded gradually.

On the other hand, when the count value $n_R$ is above $n_O$ in step $\overline{S_{16}}$, that is, when the number of times of the execution of step $\overline{S_{18}}$ is above $n_O$, step $\overline{S_{18}}$ is not executed, so the exhaust timing is not retarded more than necessary.

Fig. 12 is a flow chart of a B pulse interruption subroutine which is executed while interrupting the main routine and the A pulse interruption subroutine upon generation of B pulse. In the B pulse interruption subroutine, as shown in the figure, interruption is made upon generation of B pulse and the count value $T_{am}$ ($m = 0 - 7$) of the clock counter 135 at the rising edge of the B pulse and the count value $CF(m)$ ($m = 0 - 7$) of a free-run counter incorporated in the control circuit 26 are input (step $\overline{S_{21}}$). Then, the difference $\Delta M_e$ between the current $CF(m)$ and the previous $CF(m-1)$ is obtained (step $\overline{S_{22}}$), followed by the addition of the latest eight data $\Delta M_e(m-7)$, $\Delta M_e(m-6)$, ... $\Delta M_e(m-1)$, $\Delta M_e(m)$ to obtain the result as $M_e(m)$ (step $\overline{S_{23}}$). Then, the reciprocal of $M_e(m)$ is used as the engine speed $N_e$ (step $\overline{S_{24}}$) and judgment is made as to whether the engine speed $N_e$ is in a predetermined high revolution range (e.g. $N_{eH1} = 9800$ rpm, $N_{eH2} = 12000$ rpm) in which a large load is imposed on the engine (step $\overline{S_{25}}$). When the engine speed is within the high revolution range, judgment is made as to whether "1" is set to a timer flag $F_{T1}$ or not (step $\overline{S_{26}}$). The timer flag $F_{T1}$ indicates whether the timer $T_1$ is in operation or not and it is set to "1" during operation of the timer $T_1$. The timer $T_1$ is operated when the engine speed $N_e$ enters the high revolution range and is reset when the engine speed gets out of the same range. The value on the timer $T_1$ indicates the time of the engine being operated in the high revolution range. Where "1" is not set to the timer flag $F_{T1}$ in step $\overline{S_{26}}$, the timer $T_1$ is operated and "1" is set to the timer flag $F_{T1}$ (step $\overline{S_{27}}$), while when "1" has been set to the timer flag $F_{T1}$, judgment is made as to whether 30 seconds or more has elapsed after the operation of the timer $T_1$ (step $\overline{S_{28}}$). If the value on the timer $T_1$ is smaller than 30 seconds, judgment is made as to whether "1" is set to a timer flag $F_{T2}$ or not (step $\overline{S_{29}}$). The timer flag $F_{T2}$ indicates whether a timer $T_2$ which operates in the same manner as the timer $T_1$ is in operation or not. If "1" is not set to the timer flag $F_{T2}$ is step $\overline{S_{29}}$, the timer $T_2$ is operated and "1" is set to the timer flag $F_{T2}$ (step $\overline{S_{30}}$). When "1" has been set to the timer flag $F_{T2}$, judgment is made as to whether 20 seconds or more has elapsed after the operation of the timer $T_2$ (step $\overline{S_{31}}$). If the answer is affirmative, the timer $T_2$ is turned OFF (step $\overline{S_{32}}$) and the count value $N$ on a counter which counts the number of times of the timer $T_2$ having operated 20 seconds or more, is incremented by one (step $\overline{S_{33}}$). Then, judgment is made as to whether the count value $N$ is not smaller than a predetermined value $N_O$ (e.g. 5) or not (step $\overline{S_{34}}$) and if the answer is affirmative, it is judged that the engine is in a highly loaded condition with a load above a predetermined load imposed thereon, and "1" is set to the retard flag $F_R$ (step $\overline{S_{35}}$), whereby a retard control is made in the above A pulse interruption subroutine.

Where it is judged in step $\overline{S_{28}}$ that the timer $T_1$ has been operating 30 seconds or more, the engine is judged to be in a highly loaded condition with a load above the predetermined load imposed thereon as in the case of step $\overline{S_{31}}$, and the timers $T_1$ and $T_2$ are turned OFF to reset the timer flags $F_{T1}$ and $F_{T2}$ (steps $\overline{S_{36}}$ and $\overline{S_{37}}$), then execution passes to step $\overline{S_{35}}$, in which "1" is set to the retard flag $F_R$.

If the engine speed Ne is not in the predetermined high revolution range in step $\overline{S_{25}}$, the timers $T_1$ and $T_2$ are turned OFF to reset the timer flags $F_{T1}$ and $F_{T2}$ (steps $\overline{S_{40}}$ and $\overline{S_{41}}$), and the retard flag $F_R$ is also reset (step $\overline{S_{42}}$). Then, judgment is made as to whether the engine speed Ne has decreased to a value not higher than an idling speed $Ne_L$ or not (step $\overline{S_{43}}$) and if the answer is affirmative, the count value N of the counter which counts the number of times of the timer $T_2$ having operated 20 seconds or more, is reset (step $\overline{S_{44}}$). Thus, in step $\overline{S_{34}}$, the engine is judged to be in a highly loaded condition only when the number of times N of the timer $T_2$ having operated 20 seconds or more is $N_0$ or more without the engine speed Ne decreasing to a level not higher than the idling speed $Ne_L$.

Fig. 13 shows an A pulse interruption subroutine different from that shown in Fig. 11. In the interruption subroutines shown in Figs. 11 and 12, a highly loaded condition of the engine is detected using the engine speed as a parameter and the exhaust timing is retarded, while in the interruption subroutine shown in Fig. 13, the highly loaded condition of the engine is detected by detecting engine knocking and the exhaust timing is retarded.

In this A pulse interruption subroutine, as shown in the figure, interruption of made upon generation of A pulse, and first the engine speed Ne and the throttle valve opening $\theta_{TH}$ are input (step $\overline{S_{50}}$) and judgment is made as to whether "1" is set to a knocking flag $F_K$ or not (step $\overline{S_{51}}$). The knocking flag $F_K$ is a flag to which "1" is set upon generation of a knocking signal. If "1" is not set to the knocking flag $F_K$, then in accordance with the engine speed Ne and the throttle valve opening $\theta_{TH}$ which were input in step $\overline{S_{50}}$, a target exhaust angle $\theta_T$ corresponding to the maximum output generation timing at which the maximum output is produced at that engine speed Ne, is retrieved on the basis of a pre-stored map (step $\overline{S_{52}}$).

Where "1" is set to the knocking flag $F_K$ in step $\overline{S_{51}}$, it is judged that the engine is in a highly loaded condition with a load above a predetermined load imposed thereon, and a predetermined value K is subtracted from the target exhaust angle $\theta_T$ which was retrieved in step $\overline{S_{52}}$ to obtain a new target exhaust angle $\theta_T$ (step $\overline{S_{53}}$). This operation is repeated each time the A pulse interruption subroutine is executed and the exhaust timing is retarded in a predetermined amount at every lapse of a predetermined time.

Then, a count value $n_K$ which indicates the number of times of the execution of step $\overline{S_{53}}$ is incremented (step $\overline{S_{54}}$) and judgment is made as to whether the count value $n_K$ has reached a value not smaller than a predetermined value $n_1$ or not (step $\overline{S_{55}}$). If the answer is affirmative, the knocking flag $F_K$ is reset (step $\overline{S_{56}}$) to prevent the retard control from taking place more than necessary.

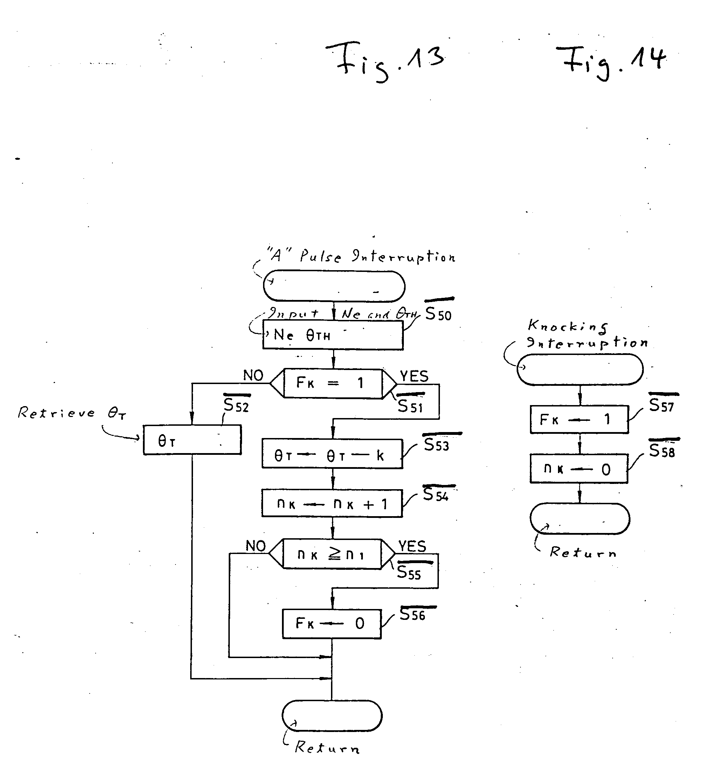

In accordance with a knocking interrutpion subroutine which is shown in Fig. 14, "1" is set to the knocking flag $F_K$ upon generation of a knocking signal (step $\overline{S_{57}}$) and the count value $n_K$ is reset upon generation of a knocking signal (step $\overline{S_{58}}$).

Although in the above embodiment the exhaust timing retard control is performed in the A pulse interruption subroutine as shown in Figs. 11 and 13, it can be executed also in the B pulse interruption subroutine.

According to the third embodiment of the exhaust timing controlling method, when a load above a predetermined load is imposed on the engine, the intake or exhaust timing is deviated gradually from the maximum output generation timing which is set on the basis of operation parameters of the engine, so the engine speed and output can be decreased little by little in the event of such high load applied to the engine, with no uncomfortableness exerted on the driver.

**Claims**

1.  An exhaust timing controlling device for a two-cycle engine comprising a combustion chamber (30) and an exhaust passage (5) **CHARACTERIZED BY**

    a control valve (11) provided in an upper portion of the exhaust passage (5) in a position close to an exhaust port (7), said control valve (11) functioning to open and close an upper portion of the exhaust port (7) to substantially move the upper end position of the exhaust port (7) vertically;

    an engine speed (Ne) detecting means (14) for detecting the number of revolutions of the engine;

    a drive means (12) for opening and closing said control valve (11); and

    a controller (13) which is connected electrically to both said drive means (12) and said engine speed (Ne) detecting means (14) and which provides a first signal to the drive means (12) to close the control valve (11) when the engine speed (Ne) is in a low revolution range (<A) or to open the control valve (11) when the engine speed (Ne) is in a high revolution range (>D), in accordance with a signal provided from said engine speed (Ne) detecting means (14), and provides a second signal to said drive means (12) in preference to said first signal to let the control valve (11) forcibly occupy a predetermined intermediate opening position (m) or a fully closed position

a) when the engine speed (Ne) has been held for a predetermined period in a predetermined high revolution range (F...I) including revolutions (G) at which a maximum engine output is exhibited for a predetermined period of time

or

b) when a predetermined period has elapsed from the time when the engine speed (Ne) has entered the said predetermined high revolution range (F....I) until when it again enters the said predetermined high revolution range (F....I) after having once got out of the said predetermined high revolution range (F....I)

or

c) controlled by direct detection of the temperature of the combustion chamber (30)

or

d) controlled by direct detection of the temperature of the exhaust passage (5).

2. The exhaust timing controlling device as set forth in claim 1 characterized in that the first signal is operating the control valve (11) in an opening direction when the engine speed (Ne) is in a low revolution range (A....C) which is within several thousand revolutions, including idling revolutions.

3. The exhaust timing controlling device as set forth in claim 2 characterized in that the first signal is operating the control valve (11) in a closing direction when the engine speed (Ne) has reached a medium revolution range (C....D) beyond the said low revolution range (A....C).

4. The exhaust timing controlling device as set forth in claim 3 characterized in that the first signal is operating the control valve (11) in an opening direction when the engine speed (Ne) has reached a high revolution range (>D) beyond the said medium revolution range (C....D).

5. The exhaust timing controlling device as set forth in any of the claims 2 to 4 characterized in that the first signal is operating the control valve (11) to occupy the fully closed position when the engine speed (Ne) is below the minimum revolution (A) of the said low revolution range (A....C), to occupy an intermediate opening position (n) when the engine speed (Ne) is between the minimum revolution (A) and a given medium revolution (B) in the said low revolution range (A....C) and to assume the fully open position when the engine speed (Ne) is between the said medium revolution (B) and the maximum revolution (C) of the said low revolution range (A....C).

6. The exhaust timing controlling device as set forth in any of the claims 3 to 5 characterized in that the first signal is operating the control valve (11) to assume the fully closed position when the engine speed (Ne) is in the said medium revolution range (C....D).

7. The exhaust timing controlling device as set forth in any of the preceding claims characterized in that the first signal is operating in the control valve (11) gradually from the fully closed position toward the fully open position according to the engine speed (Ne) when the engine speed (Ne) is in the said high revolution range (>D).

8. The exhaust timing controlling device as set forth in any of the preceding claims characterized in that the first signal is operating the control valve (11) to assume the fully open position when the engine speed (Ne) is higher than a predetermined speed (G) in the said high revolution range (>D).

9. The exhaust timing controlling device as set forth in any of the preceding claims characterized in that the second signal is terminated when the engine speed (Ne) has decreased below a predetermined speed (E) which corresponds to the said predetermined intermediate opening position (m) of the control valve (11) or when the engine speed (Ne) has increased above a predetermined speed (I) higher than the engine speed (G) at which the maximum engine output is exhibited.

10. The exhaust timing controlling device as set forth in any of the preceding claims characterized in that the second signal is inhibited when a throttle opening determining the output of the engine is smaller than a predetermined value (M).

**11.** The exhaust timing controlling device as set forth in any of the preceding claims characterized in that when a load above a predetermined value is imposed on the engine (101) the exhaust timing ($\theta_V$) is deviated gradually from a maximum output generation timing ($\theta_T$) which is set on the basis of operation parameters (Ne, $\theta_{TH}$, $F_K$) of the engine (101).

**12.** The exhaust timing controlling device as set forth in claim 11 characterized in that the exhaust timing ($\theta_V$) is set to a maximum output generation timing ($\theta_T$) at which there is obtained a maximum output on the basis of said operation parameters (Ne, $\theta_{TH}$, $F_K$) of said internal combustion engine (101); detecting a high load condition above a predetermined load on the engine (101); and deviating the exhaust timing ($\theta_V$) gradually from the maximum output generation timing ($\theta_T$) upon detection of said high load condition.

**13.** The exhaust timing controlling device as set forth in either of the claims 11 or 12 characterized in that said operation parameters (Ne, $\theta_{TH}$, $F_K$) are throttle valve opening ($\theta_{TH}$) and engine speed (Ne).

**14.** The exhaust timing controlling device as set forth in claims 11 or 12 characterized in that said operation parameters (Ne, $\theta_{TH}$, $F_K$) are throttle valve opening ($\theta_{TH}$) and knocking ($F_K$).

**Revendications**

**1.** Un dispositif de commande de conditions temporelles d'échappement pour un moteur à deux temps comprenant une chambre de combustion (30) et un passage d'échappement (5) CARACTERISE PAR
une vanne de commande (11) qui est placée dans une partie supérieure du passage d'échappement (5), dans une position proche d'une lumière d'échappement (7), cette vanne de commande (11) ouvrant et fermant une partie supérieure de la lumière d'échappement (7) pour déplacer pratiquement en direction verticale la position d'extrémité supérieure de la lumière d'échappement (7);
des moyens (14) de détection de vitesse du moteur (Ne) qui sont destinés à détecter le nombre de tours par minute du moteur;
des moyens d'entraînement (12) qui sont destinés à ouvrir et à fermer la vanne de commande (11); et
un dispositif de commande (13) qui est connecté électriquement à la fois aux moyens d'entraînement (12) et aux moyens (14) de détection de vitesse du moteur (Ne), et qui applique un premier signal aux moyens d'entraînement (12) pour fermer la vanne de commande (11) lorsque la vitesse du moteyr (Ne) est dans une plage de vitesse de rotation faible (<A), ou pour ouvrir la vanne de commande (11) lorsque la vitesse du moteur (Ne) est dans une plage de vitesse de rotation élevée (>D), conformément à un signal qui est fourni par les moyens (14) de détection de vitesse du moteur (Ne), et qui applique un second signal aux moyens d'entraînement (12), de préférence au premier signal, pour que la vanne de commande (11) occupe de force une position d'ouverture intermédiaire prédéterminée (m) ou une position complètement fermée,

a) lorsque la vitesse du moteur (Ne) a été maintenue pendant une durée prédéterminée dans une plage de vitesse de rotation élevée prédéterminée (F ... I), comprenant des vitesses de rotation (G) auxquelles le moteur fournit une puissance maximale pendant une durée prédéterminée, ou

b) lorsqu'une durée prédéterminée s'est écoulée depuis l'instant auquel la vitesse du moteur (Ne) est entrée dans la plage de vitesse de rotation élevée prédéterminée (F ... I), jusqu'à ce qu'elle entre à nouveau dans cette plage de vitesse de rotation élevée prédéterminée (F ... I), après être sortie de la plage de vitesse de rotation élevée prédéterminée (F ... I),

c) sous la commande de la détection directe de la température de la chambre de combustion (30), ou

d) sous la commande de la détection directe de la température du passage d'échappement (5).

**2.** Le dispositif de commande de conditions temporelles d'échappement selon la revendication 1, caractérisé en ce que le premier signal actionne la vanne de commande (11) dans une direction d'ouverture lorsque la vitesse du moteur (Ne) est dans une plage de vitesse de rotation faible (A ... C) qui ne dépasse pas quelques milliers de tours par minute, et qui comprend des vitesses de rotation de ralenti.

**3.** Le dispositif de commande de conditions temporelles d'échappement selon la revendication 2, caractérisé en ce que le premier signal actionne la vanne de commande (11) dans une direction de fermeture lorsque la vitesse du moteur (Ne) a atteint une plage de vitesse de rotation moyenne (C ... D), située au-delà de la plage de vitesse de rotation faible (A ... C).

4. Le dispositif de commande de conditions temporelles d'échappement selon la revendication 3, caractérisé en ce que le premier signal actionne la vanne de commande (11) dans une direction d'ouverture lorsque la vitesse du moteur (Ne) a atteint une plage de vitesse de rotation élevée (>D) située au-delà de la plage de vitesse de rotation moyenne (C ... D).

5. Le dispositif de commande de conditions temporelles d'échappement selon l'une quelconque des revendications 2 à 4, caractérisé en ce que le premier signal agit sur la vanne de commande (11) de façon qu'elle occupe la position complètement fermée, lorsque la vitesse du moteur (Ne) est inférieure à la vitesse de rotation minimale (A) de la plage de vitesse de rotation faible (A...C), de façon qu'elle occupe une position d'ouverture intermédiaire (n) lorsque la vitesse du moteur (Ne) est comprise entre la vitesse de rotation minimale (A) et une vitesse de rotation moyenne donnée (B) dans la plage de vitesse de rotation faible (A ... C), et de façon qu'elle occupe la position complètement ouverte lorsque la vitesse du moteur (Ne) est comprise entre la vitesse de rotation moyenne (B) et la vitesse de rotation maximale (C) de la plage de vitesse de rotation faible (A ... C).

6. Le dispositif de commande de conditions temporelles d'échappement selon l'une quelconque des revendications 3 à 5, caractérisé en ce que le premier signal actionne la vanne de commande (11) de façon qu'elle prenne la position complètement fermée lorsque la vitesse du moteur (Ne) est dans la plage de vitesse de rotation moyenne (C ... D).

7. Le dispositif de commande de conditions temporelles d'échappement selon l'une quelconque des revendications précédentes, caractérisé en ce que le premier signal actionne la vanne de commande (11) pour la faire passer progressivement de la position complètement fermée vers la position complètement ouverte, conformément à la vitesse du moteur (Ne), lorsque la vitesse du moteur (Ne) est dans la plage de vitesse de rotation élevée (>D).

8. Le dispositif de commande de conditions temporelles d'échappement selon l'une quelconque des revendications précédentes, caractérisé en ce que le premier signal actionne la vanne de commande (11) de façon qu'elle prenne la position complètement ouverte, lorsque la vitesse du moteur (Ne) est supérieure à une vitesse prédéterminée (G) dans la plage de vitesse de rotation élevée (>D).

9. Le dispositif de commande de conditions temporelles d'échappement selon l'une quelconque des revendications précédentes, caractérisé en ce que le second signal prend fin lorsque la vitesse du moteur (Ne) a diminué au-dessous d'une vitesse prédéterminée (E) qui correspond à la position d'ouverture intermédiaire prédéterminée précitée (m) de la vanne de commande (11), ou lorsque la vitesse du moteur (Ne) a augmenté jusqu'à une valeur supérieure à une vitesse prédéterminée (I) qui est supérieure à la vitesse du moteur (G) à laquelle le moteur fournit la puissance maximale.

10. Le dispositif de commande des conditions temporelles d'échappement selon l'une quelconque des revendications précédentes, caractérisé en ce que le second signal est inhibé lorsqu'une ouverture de papillon d'accélérateur qui détermine la puissance du moteur est inférieure à une valeur prédéterminée (M).

11. Le dispositif de commande de conditions temporelles d'échappement selon l'une quelconque des revendications précédentes, caractérisé en ce que lorsqu'une charge supérieure à une valeur prédéterminée est imposée au moteur (101), l'instant d'échappement ($\Theta_V$) est progressivement déplacé à partir d'un instant de génération de puissance maximale ($\Theta_T$), qui est fixé sur la base de paramètres de fonctionnement (Ne, $\Theta_{TH}$, $F_K$) du moteur (101).

12. Le dispositif de commande de conditions temporelles d'échappement selon la revendication 11, caractérisé en ce que l'instant d'échappement ($\Theta_V$) est fixé à un instant de génération de puissance maximale ($\Theta_T$) auquel on obtient une puissance maximale, sur la base des paramètres de fonctionnement (Ne, $\Theta_{TH}$, $F_K$) du moteur à combustion interne (101);

on détecte une condition dans laquelle une charge élevée, supérieure à une charge prédéterminée, est imposée au moteur (101); et

on déplace progressivement l'instant d'échappement ($\Theta_V$) à partir de l'instant de génération de la puissance maximale ($\Theta_T$), sous l'effet de la détection de la condition de charge élevée.

13. Le dispositif de commande de conditions temporelles d'échappement selon l'une quelconque des revendications 11 ou 12, caractérisé en ce que les paramètres de fonctionnement (Ne, $\Theta_{TH}$, $F_K$) sont l'ouverture du papillon d'ac-

céllérateur ($\Theta_{TH}$) et la vitesse du moteur (Ne).

14. Le dispositif de commande de conditions temporelles d'échappement selon les revendications 11 ou 12, caractérisé en ce que les paramètres de fonctionnement (Ne, $\Theta_{TH}$, $F_K$) sont l'ouverture du papillon d'accélérateur ($\Theta_{TH}$) et le cognement ($F_K$).

**Patentansprüche**

1. Auslaßzeit-Steuervorrichtung für eine Zweitakt-Maschine umfassend eine Verbrennungskammer (30) und einen Auslaßdurchgang (5), **gekennzeichnet** durch

ein Steuerventil (11), das in einem oberen Abschnitt des Auslaßdurchgangs (5) an einer Position nahe einer Auslaßöffnung (7) vorgesehen ist, wobei das Steuerventil (11) dazu dient, einen oberen Abschnitt der Auslaßöffnung (7) zu öffnen und zu schließen, um die obere Endstellung der Auslaßöffnung (7) wesentlich und vertikal zu bewegen;

ein Maschinendrehzahl (Ne)-Erfassungsmittel (14) zur Erfassung der Zahl von Umdrehungen der Maschine;

ein Antriebsmittel (12) zum Öffnen und Schließen des Steuerventils (11); und

eine Steuereinheit (13), welche sowohl mit dem Antriebsmittel (12) als auch dem Maschinendrehzahl-Erfassungsmittel (14) elektrisch verbunden ist und welche das Antriebsmittel (12) mit einem ersten Signal gemäß einem von dem Maschinendrehzahl-Erfassungsmittel (14) bereitgestellten Signal versieht, um das Steuerventil (11) zu schließen, wenn die Maschinendrehzahl (Ne) sich in einem Bereich niedriger Drehzahl (<A) befindet, oder um das Steuerventil (11) zu öffnen, wenn sich die Maschinendrehzahl (Ne) in einem Bereich hoher Drehzahl (>D) befindet, und welches das Antriebsmittel (12) mit einem zweiten Signal bevorzugt zu dem ersten Signal versieht, um das Steuerventil (11) gewaltsam eine vorbestimmte Zwischenöffnungstellung (m) oder eine vollständig geschlossene Stellung einnehmen zu lassen,

a) wenn die Maschinendrehzahl (Ne) über eine vorbestimmte Zeitdauer in einem vorbestimmten Bereich hoher Drehzahl (F...I) einschließlich einer Drehzahl (G), bei der eine maximale Maschinen-Ausgangsleistung für eine vorbestimmte Zeitdauer erzielt wird, gehalten wurde, oder

b) wenn eine vorbestimmte Zeitdauer abgelaufen ist seit dem Zeitpunkt, zu dem die Maschinendrehzahl (Ne) in den vorbestimmten Bereich hoher Drehzahl (F...I) eingetreten ist, bis zu dem Zeitpunkt, zu dem sie wieder in den vorbestimmten Bereich hoher Drehzahl (F...I) eintritt, nachdem sie einmal aus dem vorbestimmten Bereich hoher Drehzahl (F...I) herausgelangt war, oder
c) gesteuert durch direkte Erfassung der Temperatur der Verbrennungskammer (30), oder
d) gesteuert durch direkte Erfassung der Temperatur des Auslaßdurchgangs (5).

2. Auslaßzeit-Steuervorrichtung nach Anspruch 1, **dadurch gekennzeichnet,** daß das erste Signal das Steuerventil (11) in einer Öffnungsrichtung betätigt, wenn sich die Maschinendrehzahl (Ne) in einem Bereich niedriger Drehzahl (A...C befindet, der innerhalb einiger Tausend Umdrehungen, einschließlich der Leerlaufdrehzahl, liegt.

3. Auslaßzeit-Steuervorrichtung nach Anspruch 2, **dadurch gekennzeichnet,** daß das erste Signal das Steuerventil (11) in einer Schließrichtung betätigt, wenn die Maschinendrehzahl (Ne) einen Bereich mittlerer Drehzahl (C...D) jenseits des Bereichs niedriger Drehzahl (A...C) erreicht hat.

4. Auslaßzeit-Steuervorrichtung nach Anspruch 3, **dadurch gekennzeichnet,** daß das erste Signal das Steuerventil (11) in einer öffnungsrichtung betätigt, wenn die Maschinendrehzahl (Ne) einen Bereich hoher Drehzahl (>D) jenseits des Bereichs mittlerer Drehzahl (C...D) erreicht hat.

5. Auslaßzeit-Steuervorrichtung nach einem der Ansprüche 2 bis 4, **dadurch gekennzeichnet,** daß das erste Signal das Steuerventil (11) betätigt, um die vollständig geschlossene Stellung einzunehmen, wenn die Maschinendrehzahl (Ne) unterhalb der minimalen Drehzahl (A) des Bereichs niedriger Drehzahl (A... C) liegt, um eine Zwischenöffnungsstellung (n) einzunehmen, wenn die Maschinendrehzahl (Ne) zwischen der minimalen Drehzahl (A) und einer gegebenen mittleren Drehzahl (B) in dem Bereich niedrieger Drehzahl (A...C) liegt und die vollständig geöffnete Stellung anzunehmen, wenn die Maschinendrehzahl (Ne) sich zwischen der mittleren Drehzahl (B) und der maximalen Drehzahl (C) des Bereichs niedriger Drehzahl (A...C) befindet.

6. Auslaßzeit-Steuervorrichtung nach einem der Ansprüche 3 bis 5, **dadurch gekennzeichnet,** daß das erste Signal das Steuerventil (11) betätigt, um die vollständig geschlossene Stellung anzunehmen, wenn die Maschinendrehzahl (Ne) sich in dem Bereich mittlerer Drehzahl (C...D) befindet.

7. Auslaßzeit-Steuervorrichtung nach einem der vorhergehenden Ansprüche, **dadurch gekennzeichnet,** daß das erste Signal das Steuerventil (11) gemäß der Maschinendrehzahl (Ne) graduell von der vollständig geschlossenen Stellung in Richtung auf die vollständig geöffnete Stellung betätigt, wenn die Maschinendrehzahl (Ne) sich in dem Bereich hoher Drehzahl (>D) befindet.

8. Auslaßzeit-Steuervorrichtung nach einem der vorhergehenden Ansprüche, **dadurch gekennzeichnet,** daß das erste Signal das Steuerventil (11) betätigt, um die vollständig geöffnete Stellung anzunehmen, wenn die Maschinendrehzahl (Ne) größer als eine vorbestimmte Drehzahl (G) in dem Bereich hoher Drehzahl (>D) ist.

9. Auslaßzeit-Steuervorrichtung nach einem der vorhergehenden Ansprüche, **dadurch gekennzeichnet,** daß das zweite Signal beendet wird, wenn die Maschinendrehzahl (Ne) unter eine vorbestimmte Drehzahl (E) absinkt, welche der vorbestimmten Zwischenöffnungsstellung (m) des Steuerventils (11) entspricht, oder wenn die Maschinendrehzahl (Ne) über eine vorbestimmte Drehzahl (I) angestiegen ist, die größer ist als die Maschinendrehzahl (G), bei der die maximale Maschinen-Ausgangsleistung erzielt wird.

10. Auslaßzeit-Steuervorrichtung nach einem der vorhergehenden Ansprüche, **dadurch gekennzeichnet,** daß das zweite Signal verhindert wird, wenn eine Drosselöffnung, die die Ausgangsleistung der Maschine bestimmt, kleiner ist als ein vorbestimmter Wert (M).

11. Auslaßzeit-Steuervorrichtung nach einem der vorhergehenden Ansprüche, **dadurch gekennzeichnet,** daß dann, wenn der Maschine (101) eine Last oberhalb eines vorbestimmten Werts auferlegt wird, die Auslaßzeit ($\Theta_V$) graduell von einer Zeit bzw. einem Timing ($\Theta_T$) zur Erzeugung maximaler Ausgangsleistung abgelenkt wird, die bzw. das auf Grundlage der Betriebsparameter (Ne, $\Theta_{TH}$, $F_K$) der Maschine (101) festgesetzt ist.

12. Auslaßzeit-Steuervorrichtung nach Anspruch 11, **dadurch gekennzeichnet,** daß die Auslaßzeit ($\Theta_V$) auf ein eine Zeit $\Theta_T$) zur Erzeugung maximaler Ausgangsleistung festgesetzt wird, bei der eine maximale Ausgangsleistung auf Grundlage der Betriebsparameter (Ne, $\Theta_{TH}$, $F_K$) der Brennkraftmaschine (101) erhalten wird; Erfassen eines Hochlastzustands der Maschine (101) oberhalb einer vorbestimmten Last; und graduelles Ablenken der Auslaßzeit ($\Theta_V$) von der Zeit ($\Theta_T$) zur Erzeugung maximaler Ausgangsleistung nach Erfassen des Hochlastzustands.

13. Auslaßzeit-Steuervorrichtung nach einem der Ansprüche 11 oder 12, **dadurch gekennzeichnet,** daß die Betriebsparameter (Ne, $\Theta_{TH}$, $F_K$), Drosselklappenöffnung ($\Theta_{TH}$) und Maschinendrehzahl (Ne) sind.

14. Auslaßzeit-Steuervorrichtung nach einem der Ansprüche 11 oder 12, **dadurch gekennzeichnet,** daß die Betriebsparameter (Ne, $\Theta_{TH}$, $F_K$), Drosselklappenöffnung ($\Theta_{TH}$) und Klopfen ($F_K$) sind.

Fig. 1

# Fig.2

EP 0 287 038 B1

# Fig.3

Output

(d)

(c)

Z

(b)

(a)

D    E    F  G   H    I    (Ne)

Engine speed

# Fig. 4

Opening of the control valve

fully opened

M
m

fully closed

middle        high

A B C           D          E    F  G    H    I

low

Engine speed  (Ne)

Fig. 5

Start — S1

S2 — Ne ≧ F — YES → Normal Operation — S10
    NO ↓

S3 — Ne < I — YES → Normal Operation
    NO ↓

S4 — Timer ON ? — YES
    NO → Timer Start — S11

S5 — Timer 20 sec or more ? — YES
    NO

YES → Reset Timer — S6 / Shift Control Valve to (1) — S7

S8 — E ≦ Ne ≦ I — YES
    NO → Return to Normal Operation — S9

Shift Control Valve to (1)

Return to Normal Operation

19

Fig. 6

opening of the control valve

fully closed

m

fully opened

ABC D E F G H I

Engine Speed (Ne)

(a)

(b)

Throttle Opening

fully closed

intermediate opening, M

intermediate opening, N

fully opened

# Fig. 7

S1 — Start

Normal Operation — S12

S2 — Ne ≧ F — NO

YES

S3 — Ne ≦ I — NO

Throttle — YES

S4 — N — NO

Timer ON ? — YES

Timer Start — S13

S5 — NO

Timer 20 sec or more ?

YES

S6 — NO

YES

S7 — Shift Control Value to — m

S8 — Reset Timer

S9 — E ≦ Ne ≦ I — YES — S10 — ≦ M — NO

NO — Throttle — YES

S11

Return to Normal Operation

21

Fig. 8

Fig. 9

# Fig. 10

**Power ON**

*Initialize* — $\overline{S_1}$

$\overline{S_2}$

$\theta_V > \theta_T + \mathcal{E}_0$ — NO / YES

$\overline{S_3}$

$\theta_V < \theta_T - \mathcal{E}_0$ — NO / YES

$\overline{S_5}$ — $\overline{S_4}$

Rotate Flap Plate 111
Forward by
$|\theta_V - \theta_{AT}|$

Rotate Flap Plate 111
Reverse by
$|\theta_V - \theta_{AT}|$

Fig. 11

"A" Pulse Interruption

Input Ne and $\theta_{TH}$

Ne, $\theta_{TH}$ — S6

S7

$F_R = 1$   NO / YES

$F_{RA} \leftarrow 0$ — S8

S10

$F_{RA} = 1$   NO / YES

$F_{RA} \leftarrow 1$ — S11

S14

$t \geq t_0$   NO / YES

$t \leftarrow t + 1$ — S19

$t \leftarrow 0$ — S15

$n_R \leftarrow 0$ — S12

S16

$n_R \geq n_0$   NO / YES

$t \leftarrow t_0$ — S13

$n_R \leftarrow n_R + 1$ — S17

Retrieve $\theta_T$

S9

$\theta_T \leftarrow \theta_T - \Delta\theta_{T0}$ — S18

Return

# Fig. 12

"B" Pulse Interruption

Input Tam and CF(m) → | Tam , CF(m) | S21

| $\Delta Me(m) \leftarrow CF(m) - CF(m-1)$ | S22

| $Me(m) \leftarrow \sum\limits_{i=m-7}^{m} \Delta Me(i)$ | S23

| $Ne \leftarrow 1/Me(m)$ | S24

S25
NO ◁ $Ne_{H1} \leqq Ne \leqq Ne_{H2}$ ▷ YES

S26
NO ◁ $F_{T1} = 1$ ▷ YES

| $F_{T1} \leftarrow 0$ | S40

| $F_{T1} \leftarrow 1$ | S27

S28
NO ◁ $T_1 \geqq 30$ ▷ YES
sec

| $F_{T2} \leftarrow 0$ | S41

S29
NO ◁ $F_{T2} = 1$ ▷ YES

| $F_{R} \leftarrow 0$ | S42

| $F_{T2} \leftarrow 1$ | S30

| $F_{T1} \leftarrow 0$ | S36

| $F_{T2} \leftarrow 0$ | S37

S43
NO ◁ $Ne \leqq Ne_L$ ▷ YES

S31
NO ◁ $T_2 \geqq 20$ ▷ YES
sec

S44
| $N \leftarrow 0$ |

| $F_{T2} \leftarrow 0$ | S32

| $N \leftarrow N+1$ | S33

S34
NO ◁ $N \geqq N_0$ ▷ YES

S35
| $F_{R} \leftarrow 1$ |

Return

*Fig.13*   *Fig.14*

"A" Pulse Interruption

Input Ne and $\theta_{TH}$  —  S50

| Ne  $\theta_{TH}$ |

NO —— Fк = 1 —— YES
S52                  S51

Retrieve $\theta_T$
$\theta_T$

$\theta_T \leftarrow \theta_T - k$  —  S53

$n_K \leftarrow n_K + 1$  —  S54

NO —— $n_K \geq n_1$ —— YES
S55

Fк ← 0  —  S56

Return

Knocking Interruption

Fк ← 1  —  S57

$n_K \leftarrow 0$  —  S58

Return

27